(19) Europäisches Patentamt
European Patent Office
Office européen des brevets

(11) **EP 1 321 835 B1**

(12) **EUROPÄISCHE PATENTSCHRIFT**

(45) Veröffentlichungstag und Bekanntmachung des Hinweises auf die Patenterteilung:
**25.08.2010 Patentblatt 2010/34**

(51) Int Cl.:
***G04F 10/00*** *(2006.01)*

(21) Anmeldenummer: **02025219.3**

(22) Anmeldetag: **12.11.2002**

(54) **Verfahren und Vorrichtung zur Bestimmung der Signallaufzeit zwischen einer Positionsmesseinrichtung und einer Verarbeitungseinheit**

Method and device for measuring the signal travel time between a position measuring device and a signal processing device

Procédé et dispositif pour la mesure du temps de parcours entre une unité de mesure de position et une unité de traitement de données

(84) Benannte Vertragsstaaten:
**AT BE BG CH CY CZ DE DK EE ES FI FR GB GR IE IT LI LU MC NL PT SE SK TR**

(30) Priorität: **20.12.2001 DE 10162735**

(43) Veröffentlichungstag der Anmeldung:
**25.06.2003 Patentblatt 2003/26**

(73) Patentinhaber: **Dr. Johannes Heidenhain GmbH 83292 Traunreut (DE)**

(72) Erfinder:
• **Bratzdrum, Erwin**
 **83359 Hallabruck (DE)**
• **Wastlhuber, Robert**
 **84518 Garching/Alz (DE)**

(56) Entgegenhaltungen:
**EP-A- 1 170 643 US-A- 3 722 258**

EP 1 321 835 B1

# EP 1 321 835 B1

**Beschreibung**

Die vorliegende Erfindung betrifft ein Verfahren und eine Vorrichtung zur Bestimmung der Signallaufzeit zwischen einer Positionsmesseinrichtung und einer Verarbeitungseinheit.

Im Rahmen der Datenübertragung zwischen mehreren Positionsmesseinrichtungen und einer nachgeordneten Verarbeitungseinheit über eine digitale Schnittstelle resultieren insbesondere im Fall von langen Übertragungsstrecken bestimmte Probleme. So ergeben sich in diesem Fall nicht vernachlässigbare Signallaufzeiten auf der jeweiligen Datenleitung. Die resultierenden Verzögerungszeiten müssen zur korrekten Weiterverarbeitung der verschiedenen Daten auf Seiten der Verarbeitungseinheit berücksichtigt werden. Wenn nunmehr Konfigurationen mit mehreren Positionsmesseinrichtungen vorliegen, die mit einer gemeinsamen nachgeordneten Verarbeitungseinheit verbunden sind, so ergibt sich etwa die Aufgabe - vor dem eigentlichen Messbetrieb - die jeweiligen Signallaufzeiten möglichst exakt zu bestimmen, um diese nachfolgend geeignet berücksichtigen zu können.

Aufgabe der vorliegenden Erfindung ist es daher, ein Verfahren und eine Vorrichtung zur möglichst präzisen Bestimmung der Signallaufzeit zwischen einer Positionsmesseinrichtung und einer Verarbeitungseinheit anzugeben, die über eine digitale Schnittstelle miteinander kommunizieren.

Diese Aufgabe wird gelöst durch ein Verfahren mit den Merkmalen des Anspruches 1.

Vorteilhafte Ausführungsformen des erfindungsgemäßen Verfahrens ergeben sich aus den Maßnahmen, die in den von Anspruch 1 abhängigen Patentansprüchen aufgeführt sind.

Ferner wir die vorliegende Aufgabe durch eine Vorrichtung mit den Merkmalen des Anspruches 8 gelöst.

Vorteilhafte Ausführungsformen der erfindungsgemäßen Vorrichtung ergeben sich aus den Maßnahmen, die in den von Anspruch 8 abhängigen Patentansprüchen aufgeführt sind.

Erfindungsgemäß wird nunmehr zur präzisen Bestimmung der Signallaufzeiten ein Prinzip in abgewandelter Form eingesetzt, wie es bereits in der Deutschen Patentanmeldung Nr. 100 30 357.9 beschrieben ist und auf deren Offenbarungsgehalt an dieser Stelle ausdrücklich verwiesen sei.

Analog zum Vorgehen aus der erwähnten Druckschrift können nunmehr erfindungsgemäß auch Laufzeitmessungssignale mit hoher zeitlicher Präzision zwischen der Positionsmesseinrichtung und der Verarbeitungseinheit übertragen werden. Es resultiert letztlich eine exakte Bestimmung der Signallaufzeiten zwischen der Verarbeitungseinheit und der Positionsmesseinrichtung.

Die derart ermittelte Signallaufzeit wird anschließend bei der Weiterverarbeitung der übertragenen Daten geeignet verwendet bzw. berücksichtigt.

Weitere Vorteile sowie Einzelheiten der vorliegenden Erfindung ergeben sich aus der nachfolgenden Beschreibung eines Ausführungsbeispieles anhand der beiliegenden Figuren.

Dabei zeigt

Figur 1 ein schematisiertes Blockschaltbild eines Systems aus Positionsmesseinrichtung, Signalübertragungsstrecke und Verarbeitungseinheit;

Figur 2a jeweils eine Zeitskala zur Erläuterung des erfindungsgemäßen Verfahrens bzw. der erfindungsgemäßen Vorrichtung im Fall einer endlichen Kabellänge bzw. Signalübertragungsstrecke.

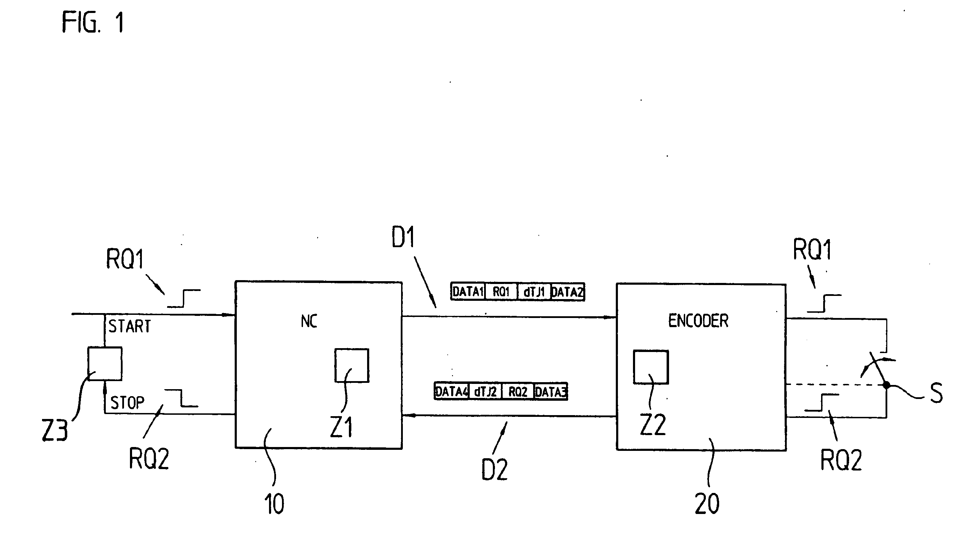

In Figur 1 ist ein schematisiertes Blockschaltbild dargestellt, das die grundsätzliche Konfiguration des Systems aus einer Positionsmesseinrichtung 20 (ENCODER) und einer damit über eine digitale Schnittstelle kommunizierenden Verarbeitungseinheit 10 (NC) veranschaulicht. Die über die Positionsmesseinrichtung 20 erzeugten Positionsdaten - beispielsweise inkrementale oder absolute Positionsdaten - werden über die digitale Schnittstelle als binäre Datenwörter DATA3, DATA4 in einem kontinuierlichen Datenstrom eines ersten Datenkanals D1 zur Weiterverarbeitung an die Verarbeitungseinheit 10 übertragen. Wie aus Figur 1 ersichtlich, ist im vorliegenden Fall desweiteren auch eine Übertragung von Daten in Form binärer Datenwörter DATA1, DATA2 über die digitale Schnittstelle in einem kontinuierlichen Datenstrom eines zweiten Datenkanals D2 von der Verarbeitungseinheit 10 zur Positionsmesseinrichtung 20 möglich. Hierbei kann es sich z.B. um Parametrierungsdaten, Befehlsdaten usw. handeln.

In einer konkreten Anwendung ist die Positionsmesseinrichtung 20 beispielsweise in einer Werkzeugmaschine angeordnet und dient dort zur Bestimmung der Position eines beweglichen Maschinenteiles, beispielsweise eines Werkzeuges. Als Verarbeitungseinheit 10 fungiert eine numerische Werkzeugmaschinensteuerung.

Im vorliegenden Beispiel werden zwischen der Positionsmesseinrichtung 20 und der Verarbeitungseinheit 10 die jeweiligen Daten des kontinuierlichen Datenstromes in Form von digitalen Datenwörtern mit einer Wortlänge von 10 Bit ausgetauscht. Selbstverständlich könnten im Rahmen der vorliegenden Erfindung auch andere Wortlängen vorgesehen werden.

Der Verarbeitungseinheit 10 ist ein erster Zähler Z1 zugeordnet, der Positionsmesseinrichtung 20 ein zweiter Zähler Z2; auf deren Funktion wird im Verlauf der weiteren Beschreibung noch detailliert eingegangen. Auf Seiten der Verarbeitungseinheit 10 ist ferner ein dritter Zähler Z3 angeordnet, der im wesentlichen zur Ermittlung der Zeitdauer $\Delta t_{RQ}$ zwischen dem Senden und Empfangen von Laufzeitmessungssignalen RQ1, RQ2 verwendet wird und der in definierten Zeitintervallen $\Delta t_{Z3}$ hochzählt. Für den dritten Zähler Z3 wird vorzugsweise die Zählfrequenz $f_{Z3}$ gleich der Systemtaktfrequenz der Verarbeitungseinheit 10 gewählt, also etwa $f_{Z3}$ = 50 MHz. Einem Zählschritt entspricht dann das Zeitintervall $\Delta t_{Z3}$ = 20 ns.

Alternativ hierzu könnte in diesem Beispiel für die Zählfrequenz $f_{Z3}$ auch die doppelte Systemtaktfrequenz gewählt werden, d.h. $f_{Z3}$ = 100 MHz. Damit ließe sich dann eine nochmals vergrößerte Genauigkeit bei der gewünschten Laufzeitbestimmung erzielen, falls dies erforderlich sein sollte.

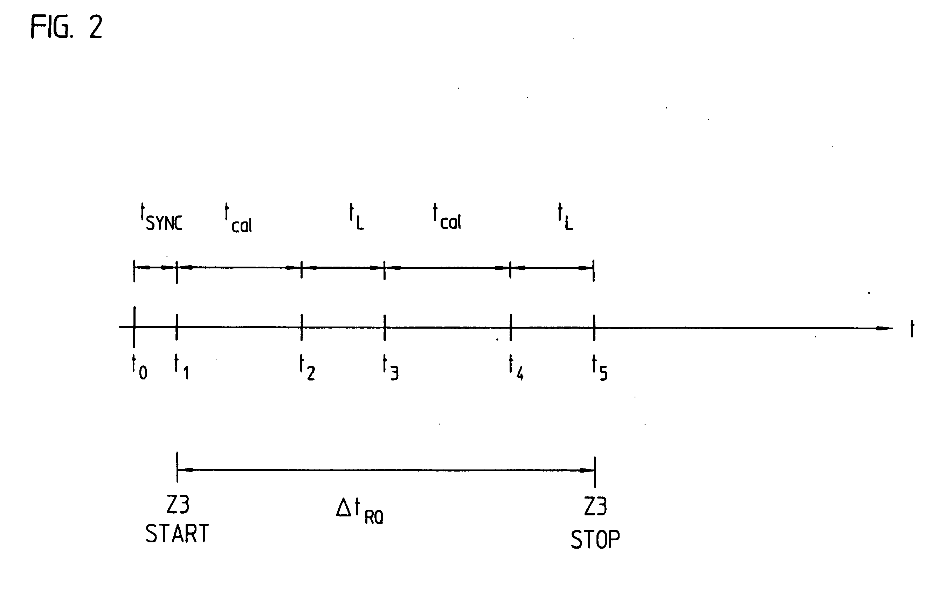

Anhand von Figur 1 und Figur 2 sei nunmehr das grundsätzliche erfindungsgemäße Vorgehen bzw. die erfindungsgemäße Vorrichtung zur Bestimmung der Signallaufzeit $t_L$ zwischen der Positionsmesseinrichtung 20 und der Verarbeitungseinheit 10 erläutert. Vorzugsweise wird die nachfolgend erläuterte, erfindungsgemäße Laufzeitbestimmung vor dem eigentlichen Messbetrieb durchgeführt.

Die erfindungsgemäße Laufzeitbestimmung wird auf Seiten der Verarbeitungseinheit 20 zum Zeitpunkt $t_0$ durch ein eintreffendes Laufzeitmessungssignal RQ1 gestartet. Wie in Figur 1 angedeutet, handelt es sich beim Laufzeitmessungssignal RQ1 etwa um eine steigende Signalflanke. Das eintreffende Laufzeitmessungssignal RQ1 dient als Startsignal für den bereits erwähnten dritten Zähler Z3, mit dem die eigentliche Laufzeitmessung durchgeführt wird. Sobald demzufolge nach einer Synchronisationszeit $t_{sync}$ die ankommende Signalflanke des Laufzeitmessungssignales RQ1 mit der Zählfrequenz $f_{Z3}$ des dritten Zählers Z3 zum Zeitpunkt $t_1$ synchronisiert ist, beginnt der dritte Zähler Z3 in definierten Zählschritten hochzuzählen.

Das Laufzeitmessungssignal RQ1 trifft während der gerade laufenden Übertragung eines binären Datenwortes DATA1 von der Verarbeitungseinheit 20 zur Positionsmesseinrichtung auf Seiten der Verarbeitungseinheit 10 ein. Hierbei ist grundsätzlich nicht a priori festgelegt, zu welchem exakten Zeitpunkt der Übertragung des 10 Bit-Datenwortes DATA1 das Laufzeitmessungssignal RQ1 eintrifft. Analog zum Vorgehen aus der bereits erwähnten Deutschen Patentanmeldung Nr. 100 30 357.9 wird daher mit Hilfe des ersten Zählers Z1 ein Lagesignal dTJ1 ermittelt, welches die zeitliche Relativlage des Laufzeitmessungssignales RQ1 zum gerade übertragenen Datenwort DATA1 beschreibt. Vorzugsweise wird als entsprechendes erstes Lagesignal dTJ1 die Zeitdifferenz $\Delta t_{J1}$ zwischen dem Beginn der Übertragung des Datenwortes DATA1 und dem Eintreffen des Laufzeitmessungssignales RQ1 bestimmt. Dies erfolgt im Beispiel über den ersten Zähler Z1, indem dieser beginnend mit der Übertragung des Datenwortes DATA1 von einem definierten Start-Zählerwert aus hochzählt bis das Laufzeitmessungssignal RQ1 anliegt und daraus in bekannter Art und Weise ein erstes Lagesignal dTJ1 in Form der ermittelten Zeitdifferenz $\Delta t_{J1}$ bestimmt.

Nach Beendigung der Übertragung des Datenwortes DATA1 werden anschließend zum Zeitpunkt $t_2$ das entsprechend aufbereitete Laufzeitmessungssignal RQ1 sowie das ermittelte Lagesignal dTJ1 als binäre Datenwörter, respektive 10 Bit-Datenwörter - an die Positionsmesseinrichtung 20 übertragen. Die Zeitdifferenz $t_{cal}$ zwischen den Zeitpunkten $t_1$ und $t_2$ beruht im wesentlichen auf der benötigten Verarbeitungszeit für die vorab erläuterte Signalverarbeitung und Signalaufbereitung in der Verarbeitungseinheit 10; nachfolgend sei deshalb diesbezüglich von der Verarbeitungszeit $t_{cal}$ die Rede. Die Verarbeitungszeit $t_{cal}$ ist üblicherweise für eine bestimmte Konfiguration bekannt und beträgt in einem typischen Beispiel etwa $t_{cal}$ = 1.7 μs.

Zum Zeitpunkt $t_3$ ist die Übertragung der beiden binären Datenwärter RQ1, dTJ1 an die Positionsmesseinrichtung 20 beendet, d.h. das Zeitintervall zwischen den Zeitpunkten $t_2$ und $t_3$ stellt letztlich die von der Übertragungsstrecke abhängige - zu ermittelnde - einfache Signallaufzeit $t_L$ dar. Um die Signallaufzeit $t_L$ auf Seiten der Verarbeitungseinheit 10 verfügbar zu haben bzw. zu ermitteln, ist nunmehr noch erforderlich, das Laufzeitmessungssignal RQ1 von der Positionsmesseinrichtung 20 wieder zurück zur Verarbeitungseinheit 10 zu übertragen, um dann mittels des dritten Zählers Z3 die Signallaufzeit $t_L$ zu bestimmen. Aus diesem Grund ist in Figur 1 ein schematisch angedeuteter Schalter S in der Positionsmesseinrichtung 20 erkennbar, über den symbolisch veranschaulicht werden soll, dass erfindungsgemäß ein Durchschleifen des ankommenden ersten Laufzeitmessungssignales RQ1 und Zurück-Übertragen eines zweiten Laufzeitmessungssignales RQ2 zur Verarbeitungseinheit 10 erfolgt. Zu diesem Zweck ist im Fall der gewünschten Laufzeitmessung der Schalter S in der Positionsmesseinrichtung 20 über einen entsprechenden Befehl von Seiten der Verarbeitungseinheit 10 her zu schließen.

Aufgrund der in der Deutschen Patentanmeldung Nr. 100 30 357.9 aufgeführten Maßnahmen, also insbesondere der Ermittlung und Übertragung des Lagesignales dTJ1, liegt das in der Positionsmesseinrichtung 20 ankommende Laufzeitmessungssignal RQ1 in zeitlich determinierter Form auf Seiten der Positionsmesseinrichtung 20 vor, d.h. ohne eine ansonsten resultierende zeitliche Unsicherheit $\Delta t$, die auf die endliche Übertragungsdauer des 10 Bit-Datenwortes DATA1 zurückgeht. Erfindungsgemäß wird nunmehr auf Seiten der Positionsmesseinrichtung 20 analog zum vorher erläuterten Vorgehen seitens der Verarbeitungseinheit 10 ein zweites Lagesignal dTJ2 ermittelt, das die zeitliche Relativlage des eintreffenden Laufzeitmessungssignales RQ1 in Bezug auf das von der Positionsmesseinrichtung gerade in Richtung der Verarbeitungseinheit 10 übertragene Datenwort DATA3 beschreibt. Die Ermittlung des zweiten Lagesignales dTJ2 erfolgt hierbei analog zum ersten Fall auf Seiten der Verarbeitungseinheit 10, d.h. mit Hilfe des zweiten Zählers Z2 wird als zweites Lagesignal dTJ2 wiederum die Zeitdifferenz $\Delta t_{J2}$ zwischen dem Beginn der Übertragung des Datenwortes DATA3 und dem Eintreffen des Laufzeitmessungssignales RQ1 erfasst. Nach Beendigung der Übertragung des Datenwortes DATA3 werden zum Zeitpunkt $t_4$ dann das zweite Lagesignal dTJ2 sowie ein zweites Laufzeitmessungssignal RQ2 als binäre 10 Bit-Datenwörter an die Verarbeitungseinheit 10 übertragen.

Ebenfalls analog zur bereits erläuterten Signalverarbeitung auf Seiten der Verarbeitungseinheit 10 erfordert die Signalverarbeitung in der Positionsmesseinrichtung 20 zwischen den Zeitpunkten $t_3$ und $t_4$ wie eben erläutert eine bestimmte Verarbeitungszeit $t_{cal}$, die üblicherweise bekannt ist und im vorliegenden Beispiel in der gleichen Größenordnung liegt wie bereits oben erwähnt, d.h. $t_{cal}= 1.7\mu s$.

Auf Seiten der Verarbeitungseinheit 10 wird das zweite Laufzeitmessungssignal RQ2 dann dem dritten Zähler Z3 als STOP-Signal zugeführt. Aus der somit bestimmten zeitlichen Differenz zwischen dem START- und STOP-Signal lässt die Zeitdauer $\Delta_{RQ}$ zwischen dem Senden des ersten Laufzeitmessungssignales RQ1 und dem Empfang des zweiten Laufzeitmessungssignales RQ2 ermitteln, aus der wiederum die Signallaufzeit $t_L$ zu bestimmen ist. Diese Verarbeitung der verschiedenen Daten erfolgt vorzugsweise über einen Mikroprozessor auf Seiten der Verarbeitungseinheit 10.

Im beschriebenen Beispiel ergibt sich hierbei die einfache Signallaufzeit $t_L$ für die Übertragung von Daten von der Verarbeitungseinheit 10 und der Positionsmesseinrichtung 20 gemäß folgender Beziehung:

$$t_L = (\Delta t_{RQ} - (2 * t_{cal})) / 2 \qquad \text{Gl. (1)}$$

mit: $t_{cal}$:= Signalverarbeitungszeit in Auswerteeinheit und Positionsmesseinrichtung.

Die Größe $t_{cal}$ ist hierbei für eine bestimmte Konfiguration bekannt oder lässt sich ggf. empirisch ermitteln.

Während die angegebene Beziehung (1) für gleiche Signalverarbeitungszeiten $t_{cal}$ in der Positionsmesseinrichtung 20 und der Verarbeitungseinheit 10 gilt, wäre grundsätzlich wäre auch denkbar, dass unterschiedliche Signalverarbeitungszeiten $t_{cal}$, $t'_{cal}$ in der Verarbeitungseinheit 10 und der Positionsmesseinrichtung 20 vorliegen. Die Beziehung zur Bestimmung der Signallaufzeit $t_L$ wäre dann etwa abzuändern in :

$$t_L = (\Delta t_{RQ} - t_{cal} - t'_{cal}) / 2 \qquad \text{Gl. (1´)}$$

Nach einer derart vorgenommenen Bestimmung der Signallaufzeit $t_L$ für die Übertragungsstrecke zwischen einer Positionsmesseinrichtung 20 und einer Verarbeitungseinheit 10 kann analog die Bestimmung der Signallaufzeiten zwischen weiteren Positionsmesseinrichtungen und der Verarbeitungseinheit erfolgen, wobei die derart ermittelten Signallaufzeiten im Messbetrieb verwendet werden können, um ggf. unterschiedliche Signallaufzeiten zu kompensieren.

Neben dem erläuterten Beispiel existieren im Rahmen der vorliegenden Erfindung selbstverständlich noch weitere Ausführungsvarianten.

**Patentansprüche**

1. Verfahren zur Bestimmung der Signallaufzeit zwischen einer Positionsmesseinrichtung (20) und einer Verarbeitungseinheit (10), die über eine digitale Schnittstelle miteinander verbunden sind, wobei über die digitale Schnittstelle Datenwörter definierter Länge zwischen der Positionsmesseinrichtung (20) und der Verarbeitungseinheit (10) übertragen werden und die Ermittlung der Signallaufzeit ($t_L$) zwischen der Positionsmesseinrichtung (20) und der Verarbeitungseinheit (10) erfolgt, indem

   - auf Seiten der Verarbeitungseinheit (10), im Fall eines eintreffenden ersten Laufzeitmessungs-Signales (RQ1) während der Übertragung eines ersten Datenwortes (DATA1) von der Verarbeitungseinheit (10) zur Positionsmesseinrichtung (20) ein erstes Lagesignal (dTJ1) bezüglich der zeitlichen Relativlage des ersten Laufzeitmessungs-Signales (RQ1) zum gerade übertragenen ersten Datenwort (DATA1) bestimmt wird,
   - nach Beendigung der Übertragung des ersten Datenwortes (DATA1) das erste Laufzeitmessungs-Signal (RQ1) sowie das ermittelte Lagesignal (dTJ1) jeweils als binäres Datenwort an die Positionsmesseinrichtung (20) übertragen werden, **dadurch gekennzeichnet, dass**
   - auf Seiten der Positionsmesseinrichtung (20) ein zweites Lagesignal (dTJ2) bezüglich der zeitlichen Relativlage des eintreffenden Laufzeitmessungssignales (RQ1) in Bezug auf ein gerade übertragenes zweites Datenwort (DATA3) bestimmt wird,
   - nach Beendigung der Übertragung des zweiten Datenwortes (DATA3) ein zweites Laufzeitmessungs-Signal (RQ2) sowie das ermittelte zweite Lagesignal (dTJ2) jeweils als binäres Datenwort an die Verarbeitungseinheit (10) übertragen wird und
- auf Seiten der Verarbeitungseinheit (10) aus der zeitlichen Differenz zwischen einem START- und einem STOP-Signal eine Zeitdauer ($\Delta t_{RQ}$) ermittelt wird, wobei
- als START-Signal das eintreffende erste Laufzeitmessungs-Signal (RQ1) dient und
- als STOP-Signal das eintreffende zweite Laufzeitmessungs-Signal (RQ2) dient und
- aus der ermittelten Zeitdauer ($\Delta t_{RQ}$) die Signallaufzeit ($t_L$) bestimmt wird.

2. Verfahren nach Anspruch 1, wobei als erstes und zweites Lagesignal (dTJ1, dTJ2) jeweils die Zeitdifferenz ($\Delta t_{J1}$, $\Delta t_{J2}$) zwischen dem Beginn des gerade übertragenen Datenwortes (DATA1, DATA3) und dem Eintreffen des Laufzeitmessungssignales (RQ1, RQ2) bestimmt wird.

3. Verfahren nach Anspruch 2, wobei die Zeitdifferenz ($\Delta t_{J1}$, $\Delta t_{J2}$) jeweils mit Hilfe eines ersten und zweiten Zählers (Z1, Z2) bestimmt wird, der jeweils zu Beginn der Übertragung eines binären Datenwortes (DATA1, DATA3) auf einen definierten Start-Zählerwert zurückgesetzt wird.

4. Verfahren nach Anspruch 1, wobei die Zeitdauer ($\Delta t_{RQ}$) zwischen dem Senden des ersten Laufzeitmessungs-Signales (RQ1) und dem Empfang des zweiten Laufzeitmessungs-Signales (RQ2) auf Seiten der Verarbeitungseinheit (10) mit einem dritten Zähler (Z3) bestimmt wird, der auf Seiten der Verarbeitungseinheit (10) angeordnet ist.

5. Verfahren nach Anspruch 4, wobei der dritte Zähler (Z3) eine Zählfrequenz ($f_{Z3}$) besitzt, die der Systemtaktfrquenz der Verarbeitungseinheit entspricht.

6. Verfahren nach Anspruch 1, wobei sich die Signallaufzeit ($t_L$) für die Übertragung von Daten zwischen der Verarbeitungseinheit (10) und der Positionsmesseinrichtung (20) gemäß

$$t_L = (\Delta t_{RQ} - (2 * t_{cal})) / 2$$

ergibt, mit
$t_{cal}$:= Signalverarbeitungszeit in Auswerteeinheit und Positionsmesseinrichtung.

7. Verfahren nach Anspruch 1, wobei derart die Signallaufzeiten zwischen der Verarbeitungseinheit (10) und verschiedenen Positionsmesseinrichtungen bestimmt werden und im Messbetrieb zur Kompensation unterschiedlicher Signallaufzeiten herangezogen werden.

8. Vorrichtung zur Bestimmung der Signallaufzeit zwischen einer Positionsmesseinrichtung (20) und einer Verarbeitungseinheit (10), die über eine digitale Schnittstelle miteinander verbunden sind, wobei über die digitale Schnittstelle die Übertragung von Datenwörtern definierter Länge zwischen der Positionsmesseinrichtung (20) und der Verarbeitungseinheit (10) erfolgt und die Vorrichtung zur Ermittlung der Signallaufzeit ($t_L$) zwischen der Positionsmesseinrichtung (20) und der Verarbeitungseinheit (10) folgende Mittel umfasst:

- auf Seiten der Verarbeitungseinheit (10) angeordnete erste Mittel, die eingerichtet sind, um im Fall eines eintreffenden ersten Laufzeitmessungs-Signales (RQ1) während der Übertragung eines ersten Datenwortes (DATA1) von der Verarbeitungseinheit (10) zur Positionsmesseinrichtung (20) ein erstes Lagesignal (dTJ1) bezüglich der zeitlichen Relativlage des ersten Laufzeitmessungs-Signales (RQ1) zum gerade übertragenen ersten Datenwort (DATA1) zu bestimmen,
- zweite Mittel, die eingerichtet sind, um nach Beendigung der Übertragung des Datenwortes (DATA1) das erste Laufzeitmessungs-Signal (RQ1) sowie das ermittelte Lagesignal (dTJ1) jeweils als binäres Datenwort an die Positionsmesseinrichtung (20) zu übertragen,
**dadurch gekennzeichnet, dass** die Vorrichtung umfasst:
- auf Seiten der Positionsmesseinrichtung (20) angeordnete dritte Mittel, die eingerichtet sind, um ein zweites Lagesignal (dTJ2) bezüglich der zeitlichen Relativlage des eintreffenden Laufzeitmessungssignales (RQ1) in Bezug auf ein gerade übertragenes zweites Datenwort (DATA3) zu bestimmen,
- vierte Mittel, die eingerichtet sind, um nach Beendigung der Übertragung des Datenwortes (DATA3) ein zweites Laufzeitmessungs-Signal (RQ2) sowie das ermittelte zweite Lagesignal (dTJ2) jeweils als binäres Datenwort an die Verarbeitungseinheit (10) zu übertragen,
- auf Seiten der Verarbeitungseinheit (10) angeordnete fünfte Mittel, die eingerichtet sind, um aus der zeitlichen Differenz zwischen einem START- und einem STOP-Signal eine Zeitdauer ($\Delta t_{RQ}$) zu ermitteln, wobei
- als START-Signal das eintreffende erste Laufzeitmessungs-Signal (RQ1) dient und
- als STOP-Signal das eintreffende zweite Laufzeitmessungs-Signal (RQ2) dient und
- sechste Mittel, die eingerichtet sind, um aus der ermittelten Zeitdauer ($\Delta t_{RQ}$) die Signallaufzeit ($t_L$) zu bestimmen.

9. Vorrichtung nach Anspruch 8, wobei die ersten und dritten Mittel jeweils als Zähler (Z1, Z2) ausgebildet sind, welche als Lagesignal (dTJ1, dTJ2) jeweils eine Zeitdifferenz ($\Delta t_{J1}$, $\Delta t_{J2}$) zwischen dem Beginn des gerade übertragenen Datenwortes (DATA1, DATA3) und dem Eintreffen des Laufzeitmessungssignales (RQ1, RQ2) bestimmen.

10. Vorrichtung nach Anspruch 8, wobei das fünfte Mittel als Zähler (Z3) ausgebildet ist, der auf Seiten der Verarbeitungseinheit (10) angeordnet ist.

11. Vorrichtung nach Anspruch 10, wobei der Zähler (Z3) eine Zählfrequenz ($f_{Z3}$) besitzt, die der Systemtaktfrquenz der Verarbeitungseinheit entspricht.

## Claims

1. A method for determining the signal propagation delay between a position measuring device (20) and a processing unit (10), which are connected to one another via a digital interface, wherein data words of a defined length are transferred between the position measuring device (20) and the processing unit (10) via the digital interface and the establishment of the signal propagation delay ($t_L$) takes place between the position measuring device (20) and the processing unit (10) in that

- in the case of an arriving first propagation time measurement signal (RQ1), a first position signal (dTJ1) relating to the chronological relative position of the first propagation time measurement signal (RQ1) to the currently transferred first data word (DATA1) is determined at the processing unit (10) during the transfer of a first data word (DATA1) from the processing unit (10) to the position measuring device (20),
- the first propagation time measurement signal (RQ1) as well as the established position signal (dTJ1) are in each case transferred to the position measuring device (20) as binary data word after the transfer of the first data word (DATA1) has ended, **characterized in that**
- a second position signal (dTJ2) relating to the chronological relative position of the arriving propagation time measurement signal (RQ1) with reference to a currently transferred second data word (DATA3) is determined at the position measuring device (20),
- a second propagation time measurement signal (RQ2) as well as the established second position signal (dTJ2) are in each case transferred to the processing unit (10) as binary data word after the transfer of the second data word (DATA3) has ended and
- a time period ($\Delta t_{RQ}$) is established at the processing unit (10) from the chronological difference between a START and a STOP signal, wherein
- the arriving first propagation time measurement signal (RQ1) serves as START signal and
- the arriving second propagation time measurement signal (RQ2) serves as STOP signal and
- the signal propagation delay ($t_L$) is determined from the established time period ($\Delta t_{RQ}$).

2. The method according to claim 1, wherein the time difference ($\Delta t_{J1}$, $\Delta t_{J2}$) between the onset of the currently transferred data word (DATA1, DATA3) and the arrival of the propagation time measurement signal (RQ1, RQ2) is in each case determined as first and second position signal (dTJ1, dTJ2).

3. The method according to claim 2, wherein the time difference ($\Delta t_{J1}$, $\Delta t_{J2}$) is in each case determined by means of a first and second meter (Z1, Z2), which is in each case reset to a defined start reading at the onset of the transfer of a binary data word (DATA1, DATA3).

4. The method according to claim 1, wherein the time period ($\Delta t_{RQ}$) between the sending of the first propagation time measurement signal (RQ1) and the receipt of the second propagation time measurement signal (RQ2) is determined at the processing unit (10) by means of a third meter (Z3), which is arranged at the processing unit (10).

5. The method according to claim 4, wherein the third meter (Z3) has a metering frequency ($f_{Z3}$), which corresponds to the system clock frequency of the processing unit.

6. The method according to claim 1, wherein the signal propagation delay ($t_L$) for the transfer of data between the processing unit (10) and the position measuring device (20) results from

$$t_L = (\Delta t_{RQ} - (2 * t_{cal}))/2$$

with
$t_{cal}$ = signal processing time in evaluation unit and position measuring device.

7. The method according to claim 1, wherein the signal propagation delays between the processing unit (10) and the different position measuring devices are determined in such a manner and are used for compensating different signal propagation delays during measuring operation.

8. A device for determining the signal propagation delay between a position measuring device (20) and a processing unit (10), which are connected to one another via a digital interface, wherein the transmission of data words of a defined length is carried out between the position measuring device (20) and the processing unit (10) via the digital interface and the device for establishing the signal propagation delay ($t_L$) between the position measuring device (20) and the processing unit (10) comprises the following means:

- first means arranged at the processing unit (10), which are equipped to determining a first position signal (dTJ1) relating to the chronological relative position of the first propagation time measurement signal (RQ1) to the currently transferred first data word (DATA1) during the transfer of a first data word (DATA1) from the processing unit (10) to the position measuring device (20) in the case of an arriving first propagation time measurement signal (RQ1),
- second means, which are equipped to transfer the first propagation time measurement signal (RQ1) as well as the established position signal (dTJ1) to the position measuring device (20) in each case as binary data word after the transfer of the data word (DATA1) has ended, **characterized in that** the device comprises:
- third means arranged at position measuring device (20), which are equipped to determine a second position signal (dTJ2) relating to the chronological relative position of the arriving propagation time measurement signal (RQ1) with reference to a currently transferred second data word (DATA3),
- fourth means, which are equipped to transfer a second propagation time measurement signal (RQ2) as well as the established second position signal (dTJ2) to the processing unit (10) in each case as binary data word after the transfer of the data word (DATA3) has ended,
- fifth means arranged at the processing unit (10), which are equipped to establish a time period ($\Delta t_{RQ}$) from the chronological difference between a START and a STOP signal, wherein
- the arriving first propagation time measurement signal (RQ1) serves as START signal and
- the arriving second propagation time measurement signal (RQ2) serves as STOP signal and
- sixth means, which are equipped to determine the signal propagation delay ($t_L$) from the established time period ($\Delta t_{RQ}$).

9. The device according to claim 8, wherein the first and third means are in each case embodied as meters (Z1, Z2), which determine in each case a time difference ($\Delta t_{J1}$, $\Delta t_{J2}$) between the onset of the currently transferred data word (DATA1, DATA3) and the arrival of the propagation time measurement signal (RQ1, RQ2) as position signal (dTJ1, dTJ2).

10. The device according to claim 8, wherein the fifth means is embodied as meter (Z3), which is arranged at the processing unit (10).

11. The device according to claim 10, wherein the meter (Z3) has a metering frequency ($f_{Z3}$), which corresponds to the system clock frequency of the processing unit.

**Revendications**

1. Procédé pour la détermination de la durée d'un signal entre un dispositif de mesure de position (20) et une unité de traitement (10), reliés entre eux par une interface numérique, où des mots de données d'une longueur définie sont transmis entre le dispositif de mesure de position (20) et l'unité de traitement (10) par le biais de l'interface numérique, et la détermination de la durée de signal ($t_L$) est effectuée entre le dispositif de mesure de position (20) et l'unité de traitement (10), de la manière suivante :

- du côté de l'unité de traitement (10), dans le cas d'un premier signal de mesure de durée (RQ1) entrant, pendant la transmission d'un premier mot de données (DATA1) de l'unité de traitement (10) vers le dispositif de mesure de position (20), un premier signal de position (dTJ1) concernant la position temporelle relative du premier signal de mesure de durée (RQ1) est déterminé par rapport au premier mot de données (DATA1) venant juste d'être transmis,

- après achèvement de la transmission du premier mot de données (DATA1), le premier signal de mesure de durée (RQ1) ainsi que le signal de position déterminé (dTJ1) sont chacun transmis comme mot de données binaire au dispositif de mesure de position (20), **caractérisé en ce que**

- du côté du dispositif de mesure de position (20), un deuxième signal de position (dTJ2) concernant la position temporelle relative du signal de mesure de durée entrant (RQ1) est déterminé par rapport à un deuxième mot de données (DATA3) venant juste d'être transmis,

- après achèvement de la transmission du deuxième mot de données (DATA3), un deuxième signal de mesure de durée (RQ2) ainsi que le deuxième signal de position déterminé (dTJ2) sont chacun transmis comme mot de données binaire à l'unité de traitement (10), et

- du côté de l'unité de traitement (10), une durée temporelle ($\Delta t_{RQ}$) est déterminée à partir de la différence entre un signal DEPART et un signal STOP, où

- le premier signal de mesure de durée (RQ1) entrant sert comme signal de DEPART, et

- le deuxième signal de mesure de durée (RQ2) entrant sert comme signal de STOP, et

- la durée du signal ($t_L$) est déterminée à partir de la durée temporelle déterminée ($\Delta tRQ$).

2. Procédé selon la revendication 1, dans lequel, comme premier et deuxième signal de position (dTJ1, dTJ2), la différence temporelle ($\Delta t_{J1}$, $\Delta t_{J2}$) entre le début du mot de données (DATA1, DATA3) venant juste d'être transmis et l'entrée du signal de mesure de durée (RQ1, RQ2) est à chaque fois déterminée.

3. Procédé selon la revendication 2, dans lequel la différence temporelle ($\Delta t_{J1}$, $\Delta t_{J2}$) est déterminée à chaque fois à l'aide d'un premier et d'un deuxième compteur (Z1, Z2), qui sont à chaque fois remis à une valeur de compteur initiale au début de la transmission d'un mot de données binaire (DATA1, DATA3).

4. Procédé selon la revendication 1, dans lequel la durée temporelle ($\Delta t_{RQ}$) entre l'envoi du premier signal de mesure de durée (RQ1) et la réception du deuxième signal de mesure de durée (RQ2) est déterminée du côté de l'unité de traitement (10), à l'aide d'un troisième compteur (Z3) disposé du côté de l'unité de traitement (10).

5. Procédé selon la revendication 4, dans lequel le troisième compteur (Z3) possède une fréquence de comptage ($f_{Z3}$) correspondant à la fréquence de cadence de système de l'unité de traitement.

6. Procédé selon la revendication 1, dans lequel la durée de signal ($t_L$) pour la transmission de données entre l'unité de traitement (10) et le dispositif de mesure de position (20) est obtenue selon la formule

$$t_L = (\Delta t_{RQ} - (2 * t_{cal})) / 2$$

avec

$t_{cal}$ = durée de traitement de signal dans l'unité d'évaluation et le dispositif de mesure de position.

7. Procédé selon la revendication 1, dans lequel les durées de signal sont déterminées de la sorte entre l'unité de traitement (10) et les différents dispositifs de mesure de position, et sont prises en compte dans le mesurage pour la compensation de durées de signal variables.

8. Dispositif pour la détermination de la durée de signal entre un dispositif de mesure de position (20) et une unité de traitement (10), reliés entre eux par une interface numérique, où des mots de données d'une longueur définie sont transmis entre le dispositif de mesure de position (20) et l'unité de traitement (10) par le biais de l'interface numérique, et le dispositif pour la détermination de la durée de signal ($t_L$) entre le dispositif de mesure de position (20) et l'unité de traitement (10) comprend les moyens suivants :

- des premiers moyens disposés du côté de l'unité de traitement (10), conçu pour déterminer un premier signal de position (dTJ1) concernant la position relative du premier signal de mesure de durée (RQ1) par rapport au premier mot de données (DATA1) venant juste d'être transmis, pendant la transmission du premier mot de données (DATA1) de l'unité de traitement (10) vers le dispositif de mesure de position (20),
- un deuxième moyen conçu pour transmettre le premier signal de mesure de durée (RQ1) ainsi que le premier signal de position (dTJ1) en tant que mot de données binaires au dispositif de mesure de position (20) après achèvement de la transmission du mot de données (DATA1), **caractérisé en ce que** le dispositif comprend :
- des troisièmes moyens disposés du côté du dispositif de mesure de position (20), conçus pour déterminer un deuxième signal de position (dTJ2) concernant la position temporelle relative du signal de mesure de durée entrant (RQ1) par rapport au deuxième mot de données (DATA3) venant d'être transmis,
- des quatrièmes moyens, conçus pour transmettre un deuxième signal de mesure de durée (RQ2) ainsi que le deuxième signal de position déterminé (dTJ2) en tant que mots de données binaires à l'unité de traitement (10) après achèvement de la transmission du mot de données (DATA3),
- des cinquièmes moyens disposés du côté de l'unité de traitement (10), conçus déterminer une durée temporelle ($\Delta t_{RQ}$) à partir de la différence temporelle entre un signal DEPART et un signal STOP, où
- le premier signal de mesure de durée (RQ1) entrant sert comme signal de DEPART, et
- le deuxième signal de mesure de durée (RQ2) entrant sert comme signal de STOP, et
- des sixièmes moyens, conçus pour déterminer la durée du signal ($t_L$) à partir de la durée temporelle déterminée ($\Delta t_{RQ}$).

9. Dispositif selon la revendication 8, dans lequel les premiers et troisièmes moyens sont conçus chacun comme un compteur (Z1, Z2) déterminant en tant que signal de position (dTJ1, dTJ2) une différence temporelle ($\Delta t_{J1}$, $\Delta t_{J2}$) entre le début du mot de données (DATA1, DATA3) venant juste d'être transmis et le signal de mesure de durée entrant (RQ1, RQ2).

10. Dispositif selon la revendication 8, dans lequel le cinquième moyen est conçu comme un compteur, disposé du côté de l'unité de traitement (10).

11. Dispositif selon la revendication 10, dans lequel le compteur (Z3) possède une fréquence de comptage ($fz_3$) correspondant à la fréquence de cadence de système de l'unité de traitement.

FIG. 1

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10030357